# EUROPÄISCHE PATENTSCHRIFT

(11) **EP 2 602 555 B1**
(45) Veröffentlichungstag und Bekanntmachung des Hinweises auf die Patenterteilung: **05.04.2017**
(21) Anmeldenummer: 12194718.8
(22) Anmeldetag: 29.11.2012
(51) Int. Cl.: F24C 15/10, F16B 5/06, H05B 3/74

(54) **System mit einem Hausgerät, insbesondere einem Kochfeld, und wenigstens einer Hausgerätehalteeinheit**
System with a domestic appliance, in particular a cooking hob, and at least one domestic appliance holding unit
Système avec un appareil ménager, en particulier une plaque de cuisson, et au moins un dispositif de maintien de l'appareil ménager

(30) Priorität: 07.12.2011 ES 201131983
(43) Veröffentlichungstag der Anmeldung: 12.06.2013
(73) Patentinhaber: BSH Hausgeräte GmbH, 81739 München (DE)
(72) Erfinder: Arnal Valero, Adolfo, 50009 Zaragoza (ES); Ceamanos Gaya, Jesús, 50016 Zaragoza (ES); Dionisio Micolau, Diego, 50013 Zaragoza (ES); Hernandez Blasco, Pablo Jesus, 50410 Cuarte de Huerva (Zaragoza) (ES); Huber, Johann, 83334 Inzell (DE); Martin Gomez, Damaso, 20012 Zaragoza (ES); Ortiz Sainz, David, 50298 Pinseque (Zaragoza) (ES); Pina Gadea, Carmelo, 50008 Zaragoza (ES); Salvador Lacosta, Jose Luis, 50193 Peñaflor (Zaragoza) (ES); Schemmerer, Roman, 83349 Palling (DE); Valencia Betran, María, 50010 Zaragoza (ES)

(56) Entgegenhaltungen:
- EP-A1- 2 246 631
- EP-A2- 0 108 916
- EP-A2- 0 976 881
- DE-B1- 2 064 248
- DE-B1- 2 545 039
- DE-C1- 4 411 985
- US-A- 3 613 177

## Beschreibung

Die Erfindung geht aus von einem System mit einem Hausgerät, insbesondere einem Kochfeld, und wenigstens einer Hausgerätehalteeinheit nach dem Oberbegriff des Anspruchs 1.

Aus der DE 198 05 793 C1 ist ein System aus einem Kochfeld und wenigstens einer Hausgerätehalteeinheit zu einer Halterung des Kochfelds in einer Aussparung einer Küchenarbeitsplatte bekannt, bei welchem die Hausgerätehalteeinheit in wenigstens einem montierten Zustand eine Haltekraft auf das Kochfeld ausübt, welche senkrecht zu einer Kochfeldplatte des Kochfelds ausgerichtet ist.

Die US-Druckschrift 3,613,177 A offenbart eine Befestigungsklammer, welche ein U-förmiges Klemmteil aufweist, mit einem Eingriffselement, einem Greifarm mit Einschneidelementen und einem Abnahmeflansch, und welche schließbar auf einem Montagerahmen eines eingelassenen oder eines oberflächenmontierten Geräts positioniert ist, wie zum Beispiel einer Spüle oder einer Herdplatte. Mit einer Vielzahl solcher Befestigungsklammern, welche an den Außenseiten des Montagerahmens befestigt sind, wird das Gerät in eine Position innerhalb einer ausgeschnittenen Öffnung, welche als Arbeitsplatte oder Ähnliches ausgebildet ist, gebracht. Die Einschneidelemente des Greifarms werden in die Oberfläche der Arbeitsfläche, welche die Öffnung umschließt, gedrückt, um das Gerät innerhalb der Öffnung sicher zu montieren und schließbar zu positionieren.

Aus der deutschen Auslegeschrift DE 2 064 248 B1 ist ein Einsatzelement zum lösbaren Einbau in eine Arbeitsplatte von Küchenmöbeln bekannt, beispielsweise von einer Kochmulde oder einem Spülbecken oder einer Herdspülabdeckung, das in eine Öffnung der Arbeitsplatte einsetzbar ist, mit mindestens einem Verbindungselement zur Befestigung des Einsatzelementes an der Arbeitsplatte und mit einem Randbereich mit einer Stützfläche, die bei eingebautem Einsatzelement auf der in diesem Bereich im wesentlichen ebenen Arbeitsplatte aufliegt. Als Verbindungselement dient eine Spreizfeder, die an einer bei eingebautem Einsatzelement in die Öffnung ragenden Seitenwand des Einsatzelementes unter dessen Randbereich befestigt ist und einen gegen die Oberseite des Einsatzelementes gerichteten freien Schenkel aufweist, der federnd von der Seitenwand absteht, nach außen und gegen die Oberseite des Einsatzelementes gerichtete Krallen aufweist und so lang ist, dass er über das Niveau der Stützfläche ragt.

Die deutsche Auslegeschrift DE 25 45 039 B1 offenbart eine Einrichtung zum lösbaren Befestigen eines Geräteeinsatzes in einer Einbauöffnung eines Unterbaues mit einem mit Krallen versehenen Spannteil und einem im Spannteil drehbar eingespannten Schraubenbolzen zum Festziehen. Der Schraubenbolzen trägt ein mit Verankerungsmitteln versehenes Klemmteil, das aus zwei etwa parallel zueinander angeordneten Schenkeln, die im rechten Winkel zu dem mit Gewinde versehenen kürzeren Schenkel stehen, besteht und die sich an der Randleiste des Geräteeinsatzes abstützen. Einer der Schenkel weist eine Raste zum Einschnappen in den Aufnahmeausschnitt der Randleiste des Geräteeinsatzes auf. Der eine Schenkel des Klemmteils bildet eine den Spannteil gegen die Öffnung des Unterbaus spreizende, vorspringende Führung. Der Spannschenkel bildet durch die vorspringende Führung auslenkbar und unter Federspannung stehend ein Teil des kastenförmigen Spannteils. Das Spannteil weist gegenüber dem mit Krallen versehenen Spannschenkel einen Stütz- und Gleitwinkel, der bei der Montage an der Randleiste oder an dem Klemmteil entlanggleitet und sich im montierten Zustand an der Randleiste bzw. dem Klemmteil abstützt, auf.

Aus der deutschen Patentschrift DE 44 11 985 C1 ist eine Befestigungsvorrichtung für einen Geräteeinsatz bekannt, der in eine Einbauöffnung einer Tragplatte einsetzbar ist und mit seinem Rand auf deren Oberfläche aufliegt, mit einer winkelig abgebogenen Halteklammer, deren eines Ende am Geräteeinsatz befestigt und deren freies Ende an der Unterseite der Tragplatte unter Vorspannung anlegbar ist. Die Lage des befestigten Endes ist unabhängig von einer beim Anlegen von außen einwirkenden Kraft. Die Vorspannung ist allein durch die Formänderung der Halteklammer bestimmt.

Die Aufgabe der Erfindung besteht insbesondere darin, ein gattungsgemäßes System bereitzustellen, welches vorteilhaft einfach montierbar ist. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einem System mit einem Hausgerät, insbesondere einem Kochfeld, und wenigstens einer Hausgerätehalteeinheit, welche zu einer Halterung des Hausgeräts in einer Aussparung einer Einheit, insbesondere einer Arbeitsplatte, vorgesehen ist und in zumindest einem montierten Zustand eine Haltekraft erzeugt, welche wenigstens eine über eine reine Gewichtskraft hinausgehende erste Kraftkomponente senkrecht zu einer Haupterstreckungsebene des Hausgeräts aufweist.

Die Haltekraft weist im montierten Zustand eine zum Hausgerät hin oder vom Hausgerät weg gerichtete zweite Kraftkomponente parallel zur Haupterstreckungsebene auf. Unter "vorgesehen" soll hier und im Folgenden insbesondere speziell ausgelegt und/oder ausgestattet verstanden werden. Bei der Einheit kann es sich insbesondere um ein Möbelstück, vorzugsweise ein Küchenmöbelstück und besonders vorteilhaft um eine Arbeitsplatte, insbesondere eine Küchenarbeitsplatte, handeln. Unter einer "Aussparung" der Einheit soll insbesondere eine Ausnehmung in der Einheit und vorzugsweise eine die Einheit vollständig durchdringende Ausnehmung, insbesondere ein Loch in der Arbeitsplatte, verstanden werden. Unter einem "montierten Zustand" soll in diesem Zusammenhang insbesondere ein Zustand verstanden werden, in welchem das Hausgerät, insbesondere zusammen mit der Hausgerätehalteeinheit, in der Aussparung der Einheit montiert ist, insbesondere durch die Hausgerätehalteeinheit mittels der Haltekraft in der Aussparung gehalten ist und insbesondere zu einem Betrieb, insbesondere einem Heizbetrieb, bereit ist. Unter einer "Haltekraft" soll hier und im Folgenden insbesondere ein über die reine Gewichtskraft hinausgehende Kraft verstanden werden, durch welche das Hausgerät im montierten Zustand in wenigstens einer Raumrichtung in der Aussparung gehalten ist. Unter einer "Haupterstreckungsebene" des Hausgeräts soll insbesondere eine Ebene verstanden werden, die unter allen Ebenen eine größte Menge an Schnittpunkten mit Elementen des Hausgeräts aufweist. Sollten mehrere Ebenen eine größte Menge an Schnittpunkten aufweisen, soll insbesondere eine Ebene, die zumindest ein Element des Hausgeräts schneidet und zu allen diesen Ebenen, insbesondere zu Schnittgeraden beliebiger Paare dieser Ebenen, einen geringsten mittleren Abstand aufweist, als Haupterstreckungsebene verstanden werden. Bei Ausgestaltung des Hausgeräts als Kochfeld liegt die Haupterstreckungsebene insbesondere innerhalb einer Kochfeldplatte und insbesondere parallel zu deren größter Oberfläche. Darunter, dass die zweite Kraftkomponente "zum Hausgerät hin oder vom Hausgerät weg" gerichtet ist, soll insbesondere verstanden werden, dass eine unendliche Verlängerung der zweiten Kraftkomponente das Hausgerät in wenigstens einem Punkt schneidet. Vorzugsweise ist die zweite Kraftkomponente zumindest weitgehend senkrecht zu wenigstens einem an die Aussparung angrenzenden Randbereich der Einheit ausgerichtet. Unter "zumindest weitgehend senkrecht" soll in diesem Zusammenhang insbesondere unter einem Winkel zwischen 85° und 95°, vorzugsweise zwischen 88° und 92° und besonders vorteilhaft von 90° verstanden werden.

Durch eine solche Ausgestaltung kann ein System bestehend aus einem Hausgerät und wenigstens einer Hausgerätehalteeinheit bereitgestellt werden, welches vorteilhaft einfach montierbar ist. Insbesondere kann eine sichere Halterung des Hausgeräts in der Aussparung der Einheit unter Vermeidung zusätzlicher, von Hausgerätehalteeinheiten verschiedener Befestigungseinheiten erreicht werden. Insbesondere kann bereits durch eine verhältnismäßig geringe Anzahl von Hausgerätehalteeinheiten die sichere Halterung des Hausgerätes in der Aussparung gewährleistet werden. Ferner kann bei Verwendung von wenigstens zwei, insbesondere zumindest drei und vorzugsweise von mindestens vier Hausgerätehalteeinheiten eine Zentrierung des Hausgeräts in der Aussparung der Einheit erzielt werden. Eine aufwändige manuelle Zentrierung des Hausgeräts in der Aussparung kann somit entfallen.

Vorteilhaft ist die Hausgerätehalteeinheit in zumindest einem vormontierten Zustand am Hausgerät befestigt. Unter einem "vormontierten Zustand" soll in diesem Zusammenhang insbesondere ein Zustand des Systems vor einer Montage des Hausgeräts in der Aussparung verstanden werden, in welchem die Hausgerätehalteeinheit an dem Hausgerät montiert ist. Darunter, dass die Hausgerätehalteeinheit im vormontierten Zustand am Hausgerät "befestigt" ist, soll insbesondere verstanden werden, dass die Hausgerätehalteeinheit im vormontierten Zustand fest mit dem Hausgerät verbunden ist, insbesondere durch einen Kraftschluss und/oder vorzugsweise durch einen Formschluss. Insbesondere kann die Hausgerätehalteeinheit dauerhaft fest, insbesondere durch eine Klebe-, Schweiß-, Niet- und/oder Lötverbindung oder durch Anformen, oder wiederlösbar, insbesondere durch eine Schraubverbindung und/oder vorzugsweise durch eine Rastverbindung, an dem Hausgerät befestigt sein. Vorzugsweise ist die Hausgerätehalteeinheit im vormontierten Zustand an einem Teil eines Außengehäuses und/oder an einem Montagerahmen des Hausgeräts befestigt. Hierdurch kann eine Montage besonders vorteilhaft vereinfacht werden.

Die Hausgerätehalteeinheit umfasst zumindest ein Haftreibungselement, welches dazu vorgesehen ist, im montierten Zustand einen Reibschluss mit zumindest einem an die Aussparung angrenzenden Randbereich der Einheit einzugehen. Unter einem "Haftreibungselement" soll in diesem Zusammenhang insbesondere ein Element der Hausgerätehalteeinheit verstanden werden, welches im montierten Zustand gegen eine Oberfläche des Randbereichs gedrückt wird, insbesondere durch eine Reactio der zweiten Kraftkomponente, und dadurch insbesondere einen Reibschluss mit der Oberfläche des Randbereichs eingeht. Insbesondere weist das Haftreibungselement eine Haftreibungsfläche auf, welche im montierten Zustand unmittelbar mit dem Randbereich in Kontakt steht. Das Haftreibungselement kann zur Steigerung eines Haftreibungskoeffizienten zwischen der Haftreibungsfläche und dem Randbereich insbesondere eine Haftreibungsfläche mit wenigstens einem angeformten Haltehaken und/oder eine aufgeraute Haftreibungsfläche und/oder einen die Haftreibungsfläche bildenden Überzug, insbesondere eine Gummierung und/oder vorzugsweise eine Beschichtung, aufweisen. Unter einem "Reibschluss" soll insbesondere eine auf einer Haftreibung zwischen zwei Einheiten beruhende Verbindung der zwei Einheiten verstanden werden. Insbesondere stützt sich die Halteeinheit mittels des Reibschlusses an der Einheit ab. Hierdurch kann eine vorteilhaft einfache und insbesondere werkzeuglose Montage des Hausgeräts in der Aussparung der Einheit ermöglicht werden, insbesondere auch bei Einheiten, welche zumindest teilweise aus einem schwer bearbeitbaren Material bestehen, insbesondere einem harten Material, beispielsweise Granit, Marmor oder Materialien mit hohem Quarzanteil, und/oder einem spröden Material. Ferner kann eine Beschädigung der Einheit, insbesondere durch Bohrungen wie beispielsweise Schraublöcher, vorteilhaft vermieden werden. Insbesondere können eine zeitaufwändige Ausrichtung des Hausgeräts und Markierung von Bohrlöchern an der Einheit entfallen.

Die Hausgerätehalteeinheit umfasst zumindest eine Aushubeinheit, welche dazu vorgesehen ist, den Reibschluss bei einer Entnahme des Hausgeräts aus der Aussparung wenigstens teilweise aufzuheben. Die Aushubeinheit umfasst ein Aushubhebelelement, welches dazu vorgesehen ist, das Haftreibungselement bei der Entnahme des Hausgeräts aus der Aussparung von dem an die Aussparung angrenzenden Randbereich der Einheit wegzudrücken und dadurch den Reibschluss aufzuheben. Vorzugsweise ist das Aushubhebelelement zumindest weitgehend glatt und frei von einer einen Haftreibungskoeffizienten vergrößernden Beschichtung ausgebildet. Das Aushubhebelelement und das Haftreibungselement sind über ein Gelenk, insbesondere ein federelastisches Gelenk, verbunden. Unter einem "federelastischen Gelenk" soll insbesondere ein Gelenk verstanden werden, welches aufgrund einer Winkelverformung in eine Biegerichtung des Gelenks durch ein Biegedrehmoment ein mit einer ansteigenden Winkelverformung ansteigendes, gegen das Biegedrehmoment wirkendes Gegendrehmoment erzeugt. Hierdurch kann eine vorteilhaft einfache Demontage des Hausgeräts aus der Aussparung der Einheit ermöglicht werden, welche insbesondere werkzeuglos vonstattengehen kann.

In einer weiteren Ausgestaltung der Erfindung wird vorgeschlagen, dass die Hausgerätehalteeinheit eine Sicherungseinheit aufweist, welche dazu vorgesehen ist, im Fall einer Beschädigung wenigstens eines Teils des Hausgeräts weiterhin eine sichere Halterung des Hausgeräts in der Aussparung zu gewährleisten. Vorzugsweise ist das Teil des Hausgeräts die Kochfeldplatte des Kochfelds und die Beschädigung der Kochfeldplatte insbesondere ein Bruch der Kochfeldplatte. Vorzugsweise umfasst die Sicherungseinheit wenigstens ein Sicherungshalteelement, welches dazu vorgesehen ist, im Fall der Beschädigung das Hausgerät insbesondere mittels eines Formschlusses an der die Aussparung aufweisenden Einheit zu halten, wobei der Formschluss vorzugsweise durch ein Übergreifen des Sicherungshalteelements auf einer Oberseite der Einheit erzeugt ist. Hierdurch kann eine Betriebssicherheit vorteilhaft gesteigert werden. Insbesondere kann im Fall des Bruchs der Kochfeldplatte ein Hindurchfallen des Kochfelds durch die Aussparung der Einheit wirksam vermieden werden.

Ferner wird vorgeschlagen, dass die Sicherungseinheit wenigstens ein Abstützelement aufweist, auf welchem das Hausgerät im montierten Zustand zumindest teilweise aufliegt. Vorzugsweise sind das Abstützelement und das Sicherungshalteelement der Sicherungseinheit zumindest teilweise einstückig und vorzugsweise einstückig ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, einem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Vorzugsweise liegt das als Kochfeld ausgebildete Hausgerät im montierten Zustand mit der Kochfeldplatte auf dem Abstützelement auf. Hierdurch kann vorteilhaft eine korrekte Positionierung des Hausgeräts sichergestellt werden.

In einer vorteilhaften Ausgestaltung der Erfindung wird vorgeschlagen, dass die Hausgerätehalteeinheit wenigstens zwei federelastische Gelenke mit unterschiedlichen Biegesteifigkeiten aufweist. Darunter, dass die federelastischen Gelenke "unterschiedliche Biegesteifigkeiten" aufweisen, soll in diesem Zusammenhang insbesondere verstanden werden, dass zu einer gleichwertigen Winkelverformung der Gelenke in die Biegerichtung unterschiedliche Biegedrehmomente aufzubringen sind. Vorzugsweise umfasst die Hausgerätehalteeinheit zumindest drei Gelenke, insbesondere mit unterschiedlichen Biegesteifigkeiten. Hierdurch kann eine konstruktiv einfache Erzeugung der Haltekraft erzielt werden.

Wenn die Hausgerätehalteeinheit einstückig ausgebildet ist, kann eine konstruktiv besonders einfache Hausgerätehalteeinheit bereitgestellt werden. Ferner können eine Teilevielfalt und damit einhergehend ein Montageaufwand reduziert werden. Des Weiteren können Kosten reduziert werden. Vorzugsweise besteht die Hausgerätehalteeinheit zumindest teilweise, vorzugsweise wenigstens zu einem Großteil und besonders vorteilhaft vollständig aus einem Federstahl. Darunter, dass die Hausgerätehalteeinheit "wenigstens zu einem Großteil" aus Federstahl besteht, soll insbesondere verstanden werden, dass die Hausgerätehalteeinheit mit einem Massenanteil von wenigstens 60 %, insbesondere von zumindest 70 %, vorzugsweise von mindestens 80 % und besonders vorteilhaft von wenigstens 90 % aus Federstahl besteht. Hierdurch kann eine stabile Hausgerätehalteeinheit bereitgestellt werden, welche insbesondere eine vorteilhaft große Haltekraft erzeugen kann.

In einer besonders bevorzugten Ausgestaltung der Erfindung wird vorgeschlagen, dass die Hausgerätehalteeinheit durch Verformung eines zumindest weitgehend flachen Elements hergestellt ist. Unter einem "zumindest weitgehend flachen Element" soll in diesem Zusammenhang insbesondere ein Element verstanden werden, welches wenigstens eine längste Erstreckung aufweist, die zumindest 10-mal, insbesondere wenigstens 20-mal, vorzugsweise mindestens 30-mal und besonders vorteilhaft zumindest 40-mal größer ist als eine kürzeste Erstreckung des Elements. Unter einer "Erstreckung" des Elements soll in diesem Zusammenhang insbesondere ein maximaler Abstand zweier Punkte einer senkrechten Projektion des Elements auf eine Ebene verstanden werden. Vorzugsweise ist das flache Element zumindest weitgehend als ein flacher Quader ausgebildet. Darunter, dass das flache Element "zumindest weitgehend" als ein flacher Quader ausgebildet ist, soll insbesondere verstanden werden, dass sich das flache Element mit einem Volumenanteil von höchstens 30 %, insbesondere von maximal 20 %, vorzugsweise von höchstens 10 % und besonders vorteilhaft von maximal 5 % von einem flachen und länglichen Quader unterscheidet. Vorzugsweise ist die Hausgerätehalteeinheit ein Stanzbiegeteil, insbesondere ein Stanzbiegeblechteil, welches durch Stanzen, insbesondere auch von Ausnehmungen, und/oder Biegen geformt wird. Hierdurch kann eine Herstellung der Hausgerätehalteeinheit besonders vorteilhaft vereinfacht werden. Des Weiteren kann eine kostengünstige Hausgerätehalteeinheit bereitgestellt werden. Ferner können Transportkosten für Ausgangsstoffe der Hausgerätehalteeinheit verringert werden.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Ein Fachmann wird die Merkmale zweckmäßigerweise auch einzeln betrachten und zu sinnvollen weiteren Kombinationen zusammenfassen.

Es zeigen:
- Fig. 1: ein System mit einem als Kochfeld ausgebildeten Hausgerät und vier Hausgerätehalteeinheiten in einem vormontierten Zustand in einer Draufsicht,
- Fig. 2: das System vor einer Montage des Hausgeräts in eine Aussparung einer als Arbeitsplatte ausgebildeten Einheit in einer Schnittdarstellung entlang einer Linie II-II in Fig. 1,
- Fig. 3: eine der Hausgerätehalteeinheiten in einer isometrischen Einzelansicht,
- Fig. 4: das System in einem montierten Zustand des Hausgeräts in der Aussparung in einer Schnittdarstellung und
- Fig. 5: das System bei einer Entnahme des Hausgeräts aus der Aussparung in einer Schnittdarstellung.

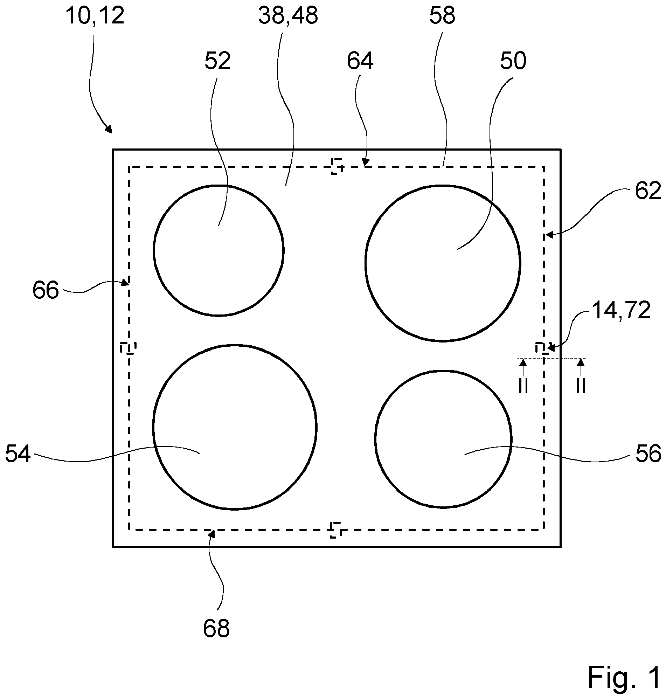

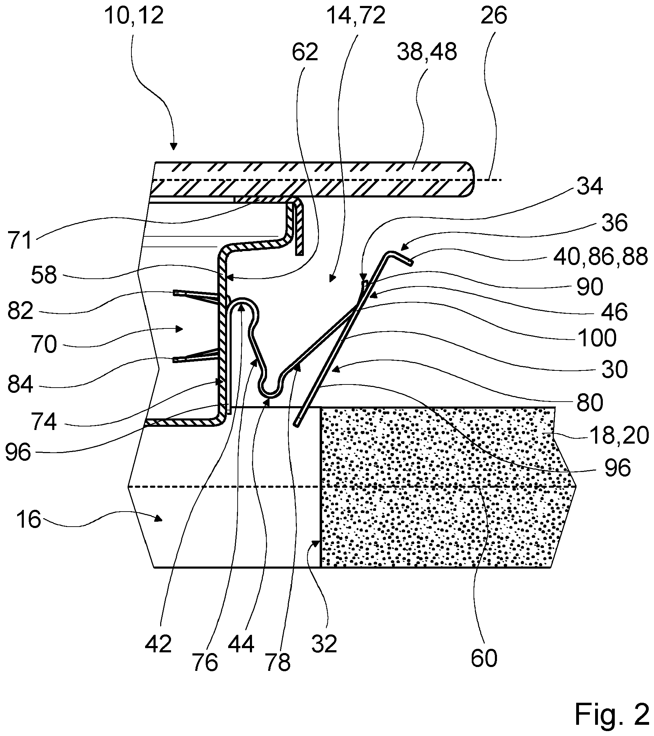

Figur 1 zeigt einen vormontierten Zustand eines erfindungsgemäßen Systems mit einem Hausgerät 10 und vier Hausgerätehalteeinheiten 14, von denen lediglich eine bezeichnet ist. Das Hausgerät 10 ist als ein Kochfeld 12 ausgebildet und umfasst eine Kochfeldplatte 48. Die Kochfeldplatte 48 besteht aus einer Glaskeramik. Auf der Kochfeldplatte 48 sind in bekannter Weise Heizzonen 50, 52, 54, 56 markiert, welche in einem betriebsbereiten Zustand des Kochfelds 12 zu einem Aufstellen von Gargeschirr zum Zwecke einer Beheizung des Gargeschirrs vorgesehen sind. In Fig. 1 gestrichelt dargestellt ist ein im betriebsbereiten Zustand unterhalb der Kochfeldplatte 48 angeordnetes Außengehäuse 58 des Kochfelds 12 (vgl. Fig. 2). Abmessungen des Außengehäuses 58 in einer Haupterstreckungsebene 26 des Kochfelds 12 betrachtet sind jeweils kleiner als entsprechende Abmessungen der Kochfeldplatte 48. An jeder der vier Seitenwände 62, 64, 66, 68 des Außengehäuses 58 ist jeweils eine Hausgerätehalteeinheit 14 mittig befestigt.

Figur 2 zeigt eine Schnittdarstellung des vormontierten Systems vor einer Montage des Hausgeräts 10 in eine Aussparung 16 einer Einheit 18 entlang einer Linie II-II in Fig. 1. Die Einheit 18 ist als eine Arbeitsplatte 20 ausgebildet. Die Aussparung 16 ist in einer senkrechten Draufsicht auf eine Haupterstreckungsebene 60 der Einheit 18 rechteckförmig. Die Aussparung 16 ist durch einen Randbereich 32 der Einheit 18 begrenzt. Abmessungen der Aussparung 16 in einer Haupterstreckungsebene 26 des Kochfelds 12 betrachtet sind jeweils größer als entsprechende Abmessungen des Außengehäuses 58. Die Kochfeldplatte 48 überdeckt in einem montierten Zustand die Aussparung 16 vollständig. Die Hausgerätehalteeinheiten 14 weisen jeweils eine Rasteinheit 70 auf, mittels der die Hausgerätehalteeinheiten 14 an den Seitenwänden 62, 64, 66, 68 des Außengehäuses 58 gehalten sind. In den Seitenwänden 62, 64, 66, 68 sind hierzu entsprechende Rastausnehmungen vorgesehen (nicht dargestellt). Das Außengehäuse 58 ist über einen Montagerahmen 71 an der Kochfeldplatte 48 befestigt. Zu Befestigung kann jede, einem Fachmann als sinnvoll erscheinende Befestigung in Frage kommen. Im vorliegenden Fall ist der Montagerahmen 71 mit dem Außengehäuse 58 verschraubt. Der Montagerahmen 71 ist mittels einer Klebeverbindung an der Kochfeldplatte 48 befestigt.

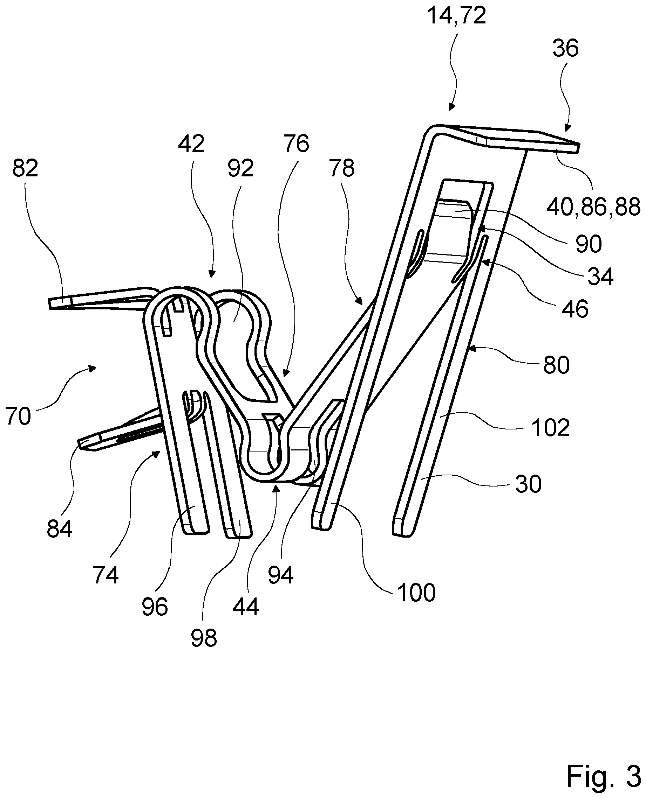

Figur 3 zeigt eine isometrische Einzelansicht einer der Hausgerätehalteeinheiten 14. Die Hausgerätehalteeinheiten 14 sind jeweils einstückig ausgebildet und jeweils durch Verformung eines zumindest weitgehend flachen Elements hergestellt. Die Hausgerätehalteeinheiten 14 bestehen aus Federstahl. Die Hausgerätehalteeinheiten 14 sind als Stanzbiegeteile 72 ausgebildet. Die Hausgerätehalteeinheiten 14 umfassen jeweils vier Arme 74, 76, 78, 80, welche über drei federelastische Gelenke 42, 44, 46 miteinander verbunden sind. Zwischen dem ersten Arm 74 und dem zweiten Arm 76 ist jeweils das erste Gelenk 42 angeordnet. Der erste Arm 74 und der zweite Arm 76 sind in einem vollständig entspannten Zustand der jeweiligen Hausgerätehalteeinheit 14 unter einem Winkel zwischen 10° und 30° angeordnet. Zwischen dem zweiten Arm 76 und dem dritten Arm 78 ist jeweils das zweite Gelenk 44 angeordnet. Der zweite Arm 76 und der dritte Arm 78 sind im vollständig entspannten Zustand der jeweiligen Hausgerätehalteeinheit 14 unter einem Winkel zwischen 60° und 80° angeordnet. Zwischen dem dritten Arm 78 und dem vierten Arm 80 ist jeweils das dritte Gelenk 46 angeordnet. Der dritte Arm 78 und der vierte Arm 80 sind in einem vollständig entspannten Zustand der jeweiligen Hausgerätehalteeinheit 14 unter einem Winkel zwischen 10° und 30° angeordnet. Die drei federelastischen Gelenke 42, 44, 46 weisen unterschiedliche Biegesteifigkeiten auf. Zur Einstellung der Biegesteifigkeit des ersten Gelenks 42 und des zweiten Gelenks 44 weisen die Hausgerätehalteeinheiten 14 im Bereich des ersten Gelenks 42 und des zweiten Gelenks 44 jeweils eine längliche Ausnehmung 92, 94 auf. Das erste Gelenke 42 und das zweite Gelenk 44 sind jeweils durch eine bogenartige Formgebung der Hausgerätehalteeinheiten 14 bewerkstelligt. Das dritte Gelenk 46 ist jeweils durch einen leichten Knick am Übergang vom dritten Arm 78 zum vierten Arm 80 bewerkstelligt. Bezüglich der Biegesteifigkeit nimmt diese vom ersten Gelenk 42 über das zweite Gelenk 44 zum dritten Gelenk 46 zu.

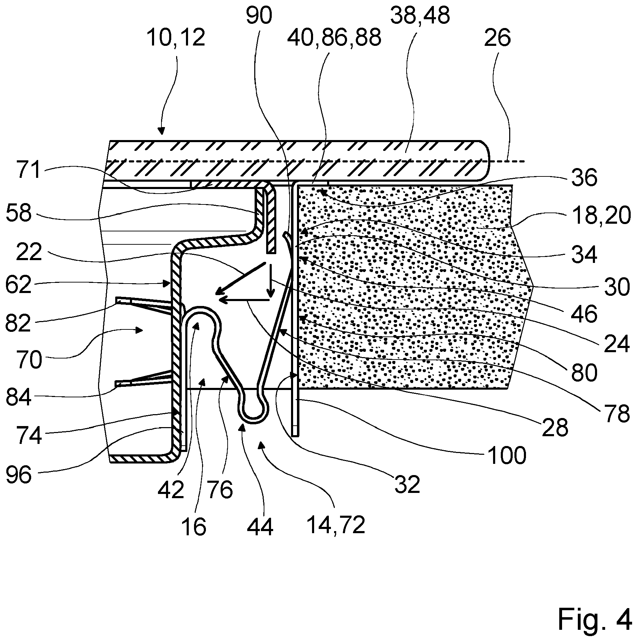

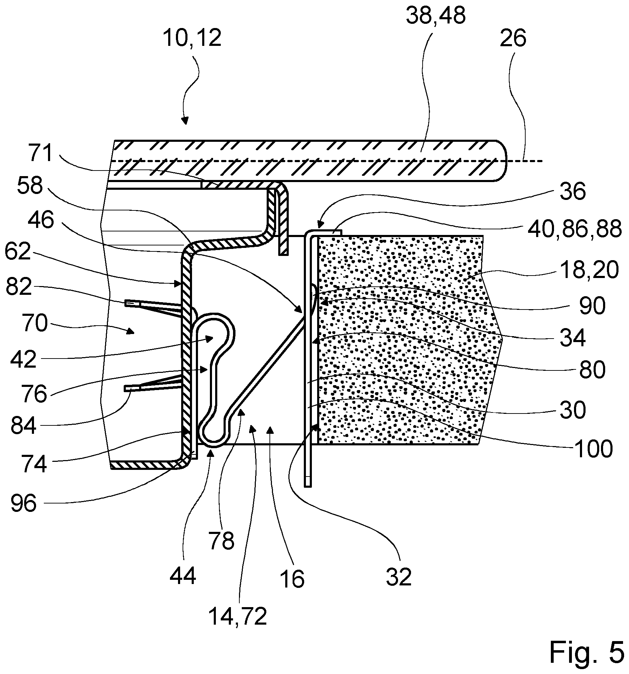

Am ersten Arm 74 ist jeweils die Rasteinheit 70 einstückig angeformt. Die Rasteinheit 70 umfasst jeweils zwei Rasthaken 82, 84, welche im vormontierten Zustand des Systems in die Rastausnehmungen der Seitenwände 62, 64, 66, 68 des Außengehäuses 58 des Hausgeräts 10 eingreifen (vgl. Fig. 2). Ferner weist der erste Arm 74 jeweils zwei Abstützelemente 96, 98 in Form länglicher Zungen auf, die im vormontierten Zustand an dem Außengehäuse 58 des Hausgeräts 10 anliegen (vgl. Fig. 2). Am vierten Arm 80 ist jeweils eine Sicherungseinheit 36 einstückig angeformt. Die Sicherungseinheit 36 ist dazu vorgesehen, im Fall einer Beschädigung eines Teils 38 des Hausgeräts 10, und zwar der Kochfeldplatte 48 des Kochfelds 12, weiterhin eine sichere Halterung des Hausgeräts 10 in der Aussparung 16 zu gewährleisten. Die Sicherungseinheit 36 umfasst ein Sicherungshalteelement 86, welches als Sicherungshaken 88 ausgebildet ist. Der Sicherungshaken 88 steht rechtwinklig vom vierten Arm 80 ab. Der Sicherungshaken 88 übergreift die Einheit 18 im montierten Zustand formschlüssig oberhalb des Randbereichs 32 (vgl. Fig. 4). Das Sicherungshalteelement 86 bildet gleichzeitig ein Abstützelement 40, auf welchem das Hausgerät 10 im montierten Zustand zumindest teilweise aufliegt (vgl. Fig. 4). Der vierte Arm 80 ist als Haftreibungselement 30 ausgebildet. Das Haftreibungselement 30 geht im montierten Zustand des Systems einen Reibschluss mit dem Randbereich 32 der Einheit 18 ein (vgl. Fig. 4). Das Haftreibungselement 30 weist jeweils zwei zueinander parallele Haftstege 100, 102 auf. Eine im montierten Zustand dem jeweiligen Randbereich 32 der Einheit 18 zugewandte Oberfläche der Haftstege 100, 102 ist aufgeraut, um einen vorteilhaft hohen Haftreibungskoeffizienten zu erzielen. Am dritten Arm 78 ist jeweils eine Aushubeinheit 34 einstückig angeformt. Die Aushubeinheit 34 ist dazu vorgesehen, den Reibschluss bei einer Entnahme des Hausgeräts 10 aus der Aussparung 16 teilweise aufzuheben (vgl. Fig. 5). Die Aushubeinheit 34 umfasst ein Aushubhebelelement 90, welches in Verlängerung des dritten Arms 78 betrachtet leicht angewinkelt an dessen dem dritten Gelenk 46 zugewandten Ende angeformt ist. Bei der Entnahme des Hausgeräts 10 aus der Aussparung 16 drückt das Aushubhebelelement 90 das Haftreibungselement 30 vom Randbereich 32 der Einheit 18 weg und löst somit den Reibschluss zumindest teilweise (vgl. Fig. 5).

In Fig. 2 ist die Hausgerätehalteeinheit 14 im vollständig entspannten Zustand dargestellt. Es wirkt lediglich die Gewichtskraft der Hausgerätehalteeinheit 14 selbst auf die Hausgerätehalteeinheit 14. Zur Montage wird das Hausgerät 10 zusammen mit den am Hausgerät 10 befestigten Hausgerätehalteeinheiten 14 von oben in die Aussparung 16 der Einheit 18 eingeführt. Im entspannten Zustand stellt der vierte Arm 80 jeder Hausgerätehalteeinheit 14 durch dessen Schrägstellung eine Führung bereit, wodurch ein Einsetzen des Hausgeräts 10 in die Aussparung 16 entscheidend vereinfacht werden kann. Beim Einsetzen des Hausgeräts 10 in die Aussparung 16 werden durch die als lange Hebelarme wirkenden dritten Arme 78 vor allem die zweiten Gelenke 44 verformt. Die dritten Gelenke 46 erfahren lediglich zu vernachlässigende Verformungen.

Figur 4 zeigt das System im montierten Zustand des Hausgeräts 10 in der Aussparung 16 in einer Schnittdarstellung. Die Kochfeldplatte 48 ist im montierten Zustand zumindest weitgehend parallel zur als Arbeitsplatte 20 ausgebildeten Einheit 18 ausgerichtet. Die Arbeitsplatte 20 ist ferner horizontal ausgerichtet, das heißt senkrecht zu einer Erdbeschleunigungsrichtung. Das Abstützelement 40 liegt jeweils auf der Einheit 18 oberhalb des jeweiligen Randbereichs 32 auf. Das Haftreibungselement 30 jeder Hausgerätehalteeinheit 14 liegt am jeweiligen Randbereich 32 der Einheit 18 an und geht mit dem Randbereich 32 jeweils einen Reibschluss ein. Eine hierfür benötigte Normalkraft senkrecht zu dem jeweiligen Randbereich 32 wird durch die Hausgerätehalteeinheit 14 erzeugt. Im montierten Zustand stehen die Hausgerätehalteeinheiten 14 unter Spannung und erzeugen jeweils eine Haltekraft 22, welche über eine reine Gewichtskraft des Systems aus Hausgerät 10 und Hausgerätehalteeinheiten 14 hinausgeht. Eine Richtung der Haltekraft 22 ist dabei zumindest im Wesentlichen jeweils durch eine Gerade durch das erste Gelenk 42 und das dritten Gelenk 46 gegeben. Die Haltekraft 22 weist jeweils eine vertikale erste Kraftkomponente 24 und eine horizontale zweite Kraftkomponenten 28 auf. Durch die sich addierenden ersten Kraftkomponenten 24 der Hausgerätehalteeinheiten 14 wird eine resultierende Kraft erzeugt, welche das Hausgerät 10 in die Aussparung 16 drückt. Dabei stützen sich die Hausgerätehalteeinheiten 14 mittels des Reibschlusses an der Einheit 18 ab. Das Hausgerät 10 wird so weit in die Aussparung 16 hineingedrückt, bis die Kochfeldplatte 48 auf den Abstützelementen 40 der Hausgerätehalteeinheiten 14 aufliegt. Die zweiten Kraftkomponenten 28 aller Hausgerätehalteeinheiten 14 sind zum Hausgerät 10 hin gerichtet und heben sich im montierten Zustand gegenseitig auf. Die zweiten Kraftkomponenten 28 bewirken eine Zentrierung des Hausgeräts 10 in der Aussparung 16. Ferner sind die zweiten Kraftkomponenten 28 für die den Reibschluss erzeugende Normalkraft verantwortlich. Im Fall eines Bruchs der Kochfeldplatte 48 würde das Hausgerät 10 durch die Aussparung 16 hindurch fallen. Um dies zu verhindern, sind jeweils die Sicherungshaken 88 der Sicherungseinheiten 36 vorgesehen, die in diesem Fall das Hausgerät 10 tragen und ein vollständiges Hindurchfallen des Hausgeräts 10 durch die Aussparung 16 verhindern.

Figur 5 zeigt das System bei einer Entnahme des Hausgeräts 10 aus der Aussparung 16 in einer Schnittdarstellung. Zur Entnahme des Hausgeräts 10 wird dieses an der Kochfeldplatte 48 nach oben aus der Aussparung 16 herausgezogen. Unter vorläufiger Beibehaltung des Reibschlusses zwischen den Haftreibungselementen 30 und den jeweiligen Randbereichen 32 der Einheit 18 werden hierdurch die Hausgerätehalteeinheiten 14 verformt. Ist eine Verformung der Hausgerätehalteeinheiten 14 derart fortgeschritten, dass die zweiten Gelenke 44 an die ersten Arme 74 stoßen, so erfolgt auch eine Verformung der dritten Gelenke 46. Hierdurch werden die Aushubhebelelemente 90 gegen den jeweiligen Randbereich 32 der Einheit 18 gedrückt, wodurch die Haftreibungselemente 30 vom jeweiligen Randbereich 32 weggedrückt werden und der Reibschluss aufgehoben wird. Das System aus Hausgerät 10 und Hausgerätehalteeinheiten 14 ist dann leicht aus der Aussparung 16 entnehmbar.

Durch die vorliegende Ausgestaltung der Hausgerätehalteeinheiten 14 mit vier Armen 74, 76, 78, 80 und drei Gelenken 42, 44, 46 kann eine Anpassung an beliebig ausgestaltete Kochfelder 12 und Einheiten 18 ermöglicht werden. Insbesondere kann eine Anpassung auch bei unterschiedlichen Montagehöhen der Hausgerätehalteeinheiten 14 an den Seitenwänden 62, 64, 66, 68 des Außengehäuses 58 des Kochfelds 12 erreicht werden.

In alternativen Ausgestaltungen kann ein System auch weniger oder mehr als vier Hausgerätehalteeinheiten umfassen. Ferner ist denkbar, dass Hausgerätehalteeinheiten an Seitenwänden eines Außengehäuses außerhalb einer Mitte der Seitenwände angeordnet sind. Ferner kann ein Haftreibungselement vorgesehen sein, welches speziell angeformte Haltehaken zu einer Halterung an einem Randbereich einer Einheit umfasst. Alternativ oder zusätzlich kann ein Haftreibungselement vorgesehen sein, welches eine spezielle Beschichtung, vorzugsweise aus wenigstens einem Polyurethan, zu einer Steigerung eines Haftreibungskoeffizienten zwischen dem Haftreibungselement und einem Randbereich einer Einheit aufweist, wodurch pro Hausgerätehalteeinheit eine erste Kraftkomponente von wenigstens 65 N erreicht werden kann.

**Bezugszeichen**

| | | | |
|---|---|---|---|
| 10 | Hausgerät | 64 | Seitenwand |
| 12 | Kochfeld | 66 | Seitenwand |
| 14 | Hausgerätehalteeinheit | 68 | Seitenwand |
| 16 | Aussparung | 70 | Rasteinheit |
| 18 | Einheit | 71 | Montagerahmen |
| 20 | Arbeitsplatte | 72 | Stanzbiegeteil |
| 22 | Haltekraft | 74 | Erster Arm |
| 24 | Erste Kraftkomponente | 76 | Zweiter Arm |
| 26 | Haupterstreckungsebene | 78 | Dritter Arm |
| 28 | Zweite Kraftkomponente | 80 | Vierter Arm |
| 30 | Haftreibungselement | 82 | Rasthaken |
| 32 | Randbereich | 84 | Rasthaken |
| 34 | Aushubeinheit | 86 | Sicherungshalteelement |
| 36 | Sicherungseinheit | 88 | Sicherungshaken |
| 38 | Teil | 90 | Aushubhebelelement |
| 40 | Abstützelement | 92 | Ausnehmung |
| 42 | Erstes Gelenk | 94 | Ausnehmung |
| 44 | Zweites Gelenk | 96 | Abstützelement |
| 46 | Drittes Gelenk | 98 | Abstützelement |
| 48 | Kochfeldplatte | 100 | Haftsteg |
| 50 | Heizzone | 102 | Haftsteg |
| 52 | Heizzone | | |
| 54 | Heizzone | | |
| 56 | Heizzone | | |
| 58 | Außengehäuse | | |
| 60 | Haupterstreckungsebene | | |
| 62 | Seitenwand | | |

## Patentansprüche

1. System mit einem Hausgerät (10), insbesondere einem Kochfeld (12), und wenigstens einer Hausgerätehalteeinheit (14), welche zu einer Halterung des Hausgeräts (10) in einer Aussparung (16) einer Einheit (18), insbesondere einer Arbeitsplatte (20), vorgesehen ist und in zumindest einem montierten Zustand eine Haltekraft (22) erzeugt, welche wenigstens eine über eine reine Gewichtskraft hinausgehende erste Kraftkomponente (24) senkrecht zu einer Haupterstreckungsebene (26) des Hausgeräts (10) aufweist, wobei die Haltekraft (22) im montierten Zustand eine zum Hausgerät (10) hin oder vom Hausgerät (10) weg gerichtete zweite Kraftkomponente (28) parallel zur Haupterstreckungsebene (26) aufweist, wobei die Hausgerätehalteeinheit (14) zumindest ein Haftreibungselement (30) umfasst, welches dazu vorgesehen ist, im montierten Zustand einen Reibschluss mit zumindest einem an die Aussparung (16) angrenzenden Randbereich (32) der Einheit (18) einzugehen, **dadurch gekennzeichnet, dass** die Hausgerätehalteeinheit (14) zumindest eine Aushubeinheit (34) umfasst, welches dazu vorgesehen ist, den Reibschluss bei einer Entnahme des Hausgeräts (10) aus der Aussparung (16) wenigstens teilweise aufzuheben, wobei die Aushubeinheit (34) ein Aushubhebelelement (90) umfasst, welches dazu vorgesehen ist, das Haftreibungselement bei der Entnahme des Hausgeräts (10) aus der Aussparung (16) von dem an die Aussparung (16) angrenzenden Randbereich (32) der Einheit (18) wegzudrücken und dadurch den Reibschluss aufzuheben, wobei das Aushubhebelelement (90) und das Haftreibungselement (30) über ein Gelenk verbunden sind.

2. System nach Anspruch 1, **dadurch gekennzeichnet, dass** die Hausgerätehalteeinheit (14) in zumindest einem vormontierten Zustand am Hausgerät (10) befestigt ist.

3. System nach einem der vorhergehenden Ansprüche, **dadurch gekennzeichnet, dass** die Hausgerätehalteeinheit (14) eine Sicherungseinheit (36) aufweist, welche dazu vorgesehen ist, im Fall einer Beschädigung wenigstens eines Teils (38) des Hausgeräts (10) weiterhin eine sichere Halterung des Hausgeräts (10) in der Aussparung (16) zu gewährleisten.

4. System nach Anspruch 3, **dadurch gekennzeichnet, dass** die Sicherungseinheit (36) wenigstens ein Abstützelement (40) aufweist, auf welchem das Hausgerät (10) im montierten Zustand zumindest teilweise aufliegt.

5. System nach einem der vorhergehenden Ansprüche, **dadurch gekennzeichnet, dass** die Hausgerätehalteeinheit (14) wenigstens zwei federelastische Gelenke (42, 44, 46) mit unterschiedlichen Biegesteifigkeiten aufweist.

6. System nach einem der vorhergehenden Ansprüche, **dadurch gekennzeichnet, dass** die Hausgerätehalteeinheit (14) einstückig ausgebildet ist.

7. System nach Anspruch 6, **dadurch gekennzeichnet, dass** die Hausgerätehalteeinheit (14) durch Verformung eines zumindest weitgehend flachen Elements hergestellt ist.

## Claims

1. System with a domestic appliance (10), in particular a cooking hob (12), and at least one domestic appliance holding unit (14) which is provided for holding the domestic appliance (10) in a recess (16) of a unit (18), in particular a worktop (20), and in at least one mounted state generates a holding force (22) which has at least one first force component (24) that exceeds a pure weight force and is perpendicular to a main extension plane (26) of the domestic appliance (10), wherein the holding force (22) has, in the mounted state, a second force component (28) that is directed towards the domestic appliance (10) or away from the domestic appliance (10) and is parallel to the main extension plane (26), wherein the domestic appliance holding unit (14) comprises at least one static friction element (30) which is provided, in the mounted state, to enter into a friction fit with at least one edge region (32) of the unit (18) adjoining the recess (16), **characterised in that** the domestic appliance holding unit (14) comprises at least one lifting unit (34) which is provided to lift the friction fit at least partially upon removal of the domestic appliance (10) from the recess (16), wherein the lifting unit (34) comprises a lifting element (90) which is provided to press the static friction element away from the edge region (32) of the unit (18) adjoining the recess (16) upon the removal of the domestic appliance (10) from the recess (16) and thereby to lift the friction fit, whereby the lifting element (90) and the static friction element (30) are connected by way of an articulated joint.

2. System according to claim 1, **characterised in that** the domestic appliance holding unit (14) is fastened to the domestic appliance (10) in at least one pre-mounted state.

3. System according to one of the preceding claims, **characterised in that** the domestic appliance holding unit (14) has a securing unit (36) which is provided in order to ensure, in the event of damage to at least one part (38) of the domestic appliance (10), the continued secure holding of the domestic appliance (10) in the recess (16).

4. System according to claim 3, **characterised in that** the securing unit (36) has at least one support element (40), on which the domestic appliance (10) lies at least partially in the mounted state.

5. System according to one of the preceding claims, **characterised in that** the domestic appliance holding unit (14) has at least two resilient articulated joints (42, 44, 46) with different bending rigidities.

6. System according to one of the preceding claims, **characterised in that** the domestic appliance holding unit (14) is designed in one piece.

7. System according to claim 6, **characterised in that** the domestic appliance holding unit (14) is produced by deformation of an at least largely flat element.

## Revendications

1. Système avec un appareil ménager (10), en particulier un champ de cuisson (12), et au moins une unité de retenue d'appareil ménager (14), prévue dans une niche (16) d'une unité (18), en particulier d'un plan de travail (20), pour une fixation de l'appareil ménager (10) et qui génère dans au moins un état monté une force de retenue (22), laquelle présente au moins une première composante de force (24) excédant un simple poids et dirigée perpendiculairement à un plan d'extension principal (26) de l'appareil ménager (10), dans lequel la force de retenue (22) présente, à l'état monté, une deuxième composante de force (28) dirigée vers l'appareil ménager (10) ou à l'écart de l'appareil ménager (10) parallèlement au plan d'extension principal (26), dans lequel l'unité de retenue d'appareil ménager (14) englobe au moins un élément de frottement par adhérence (30) prévu afin d'assurer, à l'état monté, une liaison par frottement avec au moins une zone périphérique (32) de l'unité (18) contiguë à la niche (16), **caractérisé en ce que** l'unité de retenue d'appareil ménager (14) englobe au moins une unité de déblocage (34) prévue afin de supprimer au moins partiellement la liaison par frottement lors d'un enlèvement de l'appareil ménager (10) hors de la niche (16), dans lequel l'unité de déblocage (34) englobe un élément de déblocage (90) prévu afin d'éloigner par pression, lors d'un enlèvement de l'appareil ménager (10) hors de la niche (16) l'élément de frottement par adhérence de la zone périphérique (32) contiguë à la niche (16) de l'unité (18) et de supprimer ce faisant la liaison par frottement, dans lequel l'élément de déblocage (90) et l'élément de frottement par adhérence (30) sont reliés via une articulation.

2. Système selon la revendication 1, **caractérisé en ce que** l'unité de retenue d'appareil ménager (14) est fixée à l'appareil ménager (10) dans au moins un état monté au préalable.

3. Système selon l'une des revendications précédentes, **caractérisé en ce que** l'unité de retenue d'appareil ménager (14) présente une unité de sécurisation (36) prévue afin de garantir encore une fixation sécurisée de l'appareil ménager (10) dans la niche (16) en cas d'endommagement d'au moins une partie (38) de l'appareil ménager (10).

4. Système selon la revendication 3, **caractérisé en ce que** l'unité de sécurisation (36) présente au moins un élément d'appui (40) sur lequel l'appareil ménager (10) repose au moins partiellement à l'état monté.

5. Système selon l'une des revendications précédentes, **caractérisé en ce que** l'unité de retenue d'appareil ménager (14) présente au moins deux articulations à élasticité de ressort (42, 44, 46) avec des résistances en flexion différentes.

6. Système selon l'une des revendications précédentes, **caractérisé en ce que** l'unité de retenue d'appareil ménager (14) est exécutée en une seule pièce.

7. Système selon la revendication 6, **caractérisé en ce que** l'unité de retenue d'appareil ménager (14) est fabriquée par déformation d'un élément au moins largement plan.
